(19) Europäisches Patentamt
European Patent Office
Office européen des brevets

(11) **EP 2 193 379 B1**

(12) **FASCICULE DE BREVET EUROPEEN**

(45) Date de publication et mention
de la délivrance du brevet:
**16.08.2017 Bulletin 2017/33**

(51) Int Cl.:
**G01P 3/62** (2006.01) **G01P 5/14** (2006.01)

(21) Numéro de dépôt: **08859751.3**

(22) Date de dépôt: **25.09.2008**

(86) Numéro de dépôt international:
**PCT/FR2008/001333**

(87) Numéro de publication internationale:
**WO 2009/074744 (18.06.2009 Gazette 2009/25)**

(54) **PROCEDE ET DISPOSITIF D'OBTENTION D'UNE VITESSE VERTICALE PREDICTIVE D'UN GIRAVION**

VERFAHREN UND VORRICHTUNG ZUM ERREICHEN DER PROGNOSTISCHEN STEIG- UND SINKGESCHWINDIGKEIT BEI EINEM DREHFLÜGLER

METHOD AND DEVICE FOR OBTAINING THE PREDICTIVE VERTICAL SPEED OF A ROTORCRAFT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.09.2007 FR 0706784**

(43) Date de publication de la demande:
**09.06.2010 Bulletin 2010/23**

(73) Titulaire: **Airbus Helicopters**
**13725 Marignane Cedex (FR)**

(72) Inventeur: **CERTAIN, Bernard**
**F-13.90 Aix en Provence (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A- 0 006 773        US-A- 4 250 746**
**US-A- 5 349 347        US-A1- 2005 085 959**

**Description**

La présente invention concerne un procédé d'obtention d'une vitesse verticale prédictive d'un aéronef, notamment un giravion. L'invention couvre aussi un dispositif de variomètre prédictif mettant en oeuvre ledit procédé.

En effet, afin de piloter un giravion, le pilote fait appel à une pluralité d'instruments de bord et notamment à un variomètre. Cet instrument détermine la vitesse verticale instantanée (vitesse verticale de montée ou de descente) du giravion et sert d'indicateur au pilote.

Le principe du variomètre repose sur la mesure de variation de la pression atmosphérique lors d'une montée ou d'une descente. Pour ce faire un variomètre est constitué par exemple d'une capsule manométrique reliée à un réservoir isolé thermiquement, l'ensemble étant mis en relation avec l'air libre (atmosphère ambiante) par l'intermédiaire d'un tube capillaire calibré.

Le variomètre est commandé par la différence de pression entre l'air libre (pression atmosphérique ou pression statique à l'intérieur du variomètre mais à l'extérieur de la capsule) et celle régnant dans la capsule via la liaison réalisée par le tube capillaire servant de prise d'air de calibre déterminé. En fait, le tube capillaire doit être calibré de façon que les déformations de la capsule indiquent la différence de pression entre la pression locale à un instant donné et la pression locale à l'instant immédiatement précèdent. Par suite, le tube capillaire doit être suffisamment fin pour que pendant les montée ou descente, la pression statique (atmosphère ambiante) devienne suffisamment différente de la pression à l'intérieur de la capsule.

Autrement dit, le tube capillaire induit un certain retard dans l'établissement de la pression atmosphérique dans l'ensemble capsule-réservoir.

Du fait de son principe de fonctionnement, on comprend donc que les indications d'un variomètre ne sont pas instantanées lors des changements de trajectoire d'un aéronef en vol de montée ou de descente.

Comme un variomètre n'indique que des variations de pressions, il en résulte bien entendu qu'en vol de palier, les pressions à l'intérieur et à l'extérieur du variomètre s'égalisent par l'intermédiaire du tube capillaire de sorte que l'indication de vitesse de montée ou de descente devient égale à zéro.

En outre, le pilote doit avoir impérativement connaissance de la vitesse par rapport à l'air VA, aussi appelée « vitesse aérodynamique. Celle-ci est mesurée et donnée par un anémomètre. Cet instrument est un manomètre différentiel qui mesure un écart entre la pression statique et la pression totale de l'écoulement d'air au niveau des prises de pressions correspondantes.

La pression statique (pression ambiante au niveau de la prise de pression statique) est indépendante de la vitesse par rapport à l'air de l'aéronef.

La pression totale (ou « pression d'arrêt réelle ») est obtenue à partir d'une prise de pression totale de l'écoulement d'air. L'homme du métier appelle couramment cette prise de pression totale de l'air « Pitot » ou « tube de Pitot ».

Dans ces conditions l'anémomètre comprend aussi une capsule anéroïde qui se déforme plus ou moins en fonction de la grandeur de l'écart entre la pression totale et la pression statique.

En général, les prises de pressions statique et totale sont regroupées sur une unique sonde dite sonde anémométrique. Cette sonde anémométrique est sensiblement profilée et cylindrique, avec une partie antérieure généralement hémisphérique. La sonde anémométrique est disposée sur l'aéronef de sorte que d'une part la prise de pression totale est située au point extrême amont du corps cylindrique, et d'autre part, la prise de pression statique est radiale et en arrière de la prise de pression totale.

Dans le cas particulier d'un giravion, la prise de pression statique est en principe disposée le long du fuselage alors que la prise de pression totale se situe à l'amont d'une perche plus ou moins longue.

Ainsi et par l'application du théorème de Bernoulli, valable notamment pour les vitesses d'avancement d'un giravion, ledit écart est égal à une pression dynamique (proportionnelle au carré de la vitesse de l'aéronef par rapport à l'écoulement d'air) à partir de laquelle on déduit la vitesse indiquée de l'aéronef.

Cette dernière est transmise à un instrument de bord, c'est-à-dire à un indicateur pour constituer une installation anémométrique de façon que la vitesse indiquée VA corresponde :

-   au sol, à la vitesse de l'aéronef par rapport à l'atmosphère ambiante, et

-   en altitude (en vol), à l'équivalent de vitesse, c'est-à-dire le produit de la vitesse vraie $V_V$ ou vitesse sur trajectoire par la racine carrée de la densité relative $\sigma$ de l'air, égale elle-même au quotient de la masse volumique $\rho$ de l'air à l'altitude considérée par la masse volumique de l'air $\rho 0$ au sol en « atmosphère standard », soit :

$$V_A = V_V \sqrt{\sigma} = V_V \sqrt{\frac{\rho}{\rho_0}}$$

En réalité, la vitesse indiquée diffère de l'équivalent de vitesse en raison d'erreurs instrumentales. Par suite, la vitesse indiquée doit être corrigée en tenant compte de l'étalonnage de l'installation anémométrique pour correspondre à la vitesse corrigée VC ou vitesse conventionnelle, voisine mais différente de l'équivalent de vitesse.

Il est rappelé qu'un tel instrument est étalonné uniquement pour les conditions «d'atmosphère standard» au niveau de la mer. En d'autres termes, la vitesse lue est égale en toute rigueur à la vitesse par rapport à l'air que si la pression vaut 101 325 Pascals et si la température est de 15 degrés Celsius ($\rho = \rho_0$).

Dans le cas où l'atmosphère du jour diffère notablement de l'atmosphère standard, on introduit une correction basée sur «l'altitude-densité» qu'il n'y a pas lieu de décrire ici.

Il importe de noter que les dispositifs traditionnels avec tube de Pitot et prise de pression statique ont une sensibilité qui tend à s'annuler lorsque la vitesse de l'aéronef par rapport à l'air diminue.

En outre, et dans un souci de clarté, si l'on définit une vitesse propre $V_P$, comme égale à la composante horizontale de la vitesse vraie, soit à $V_V.\cos\theta$ si $\theta$ désigne l'angle de pente de la trajectoire de l'aéronef. De la sorte, le vecteur $\overrightarrow{V_P}$ et le vecteur $\overrightarrow{V_w}$, composante horizontale du vent, ont pour résultante géométrique le vecteur vitesse sol $\overrightarrow{V_S}$, fondamental en navigation. Bien entendu, la vitesse vraie $V_V$ et la vitesse propre $V_P$ sont égales en vol de palier. Aux erreurs instrumentales près, on peut donc admettre en vol de palier que la vitesse conventionnelle VC est égale au produit de la vitesse propre $V_P$ par $\sqrt{\sigma}$, soit :

$$VC = V_P \sqrt{\sigma}$$

Par ailleurs, et dans le cas des giravions, on définit un premier et un deuxième régimes de vitesse de vol. La vitesse de vol comprise entre ces deux régimes de vitesse est appelée vitesse de puissance minimale et vaut par exemple 65 noeuds, environ. Elle correspond à une puissance nécessaire au vol en palier appelée puissance minimale. Il s'agit d'un minimum de la courbe de la puissance nécessaire au vol en palier d'un giravion en fonction de sa vitesse d'avancement. Cette puissance nécessaire est la somme de :

- la puissance induite, liée à la sustentation qu'il faut produire, et égale au produit de la vitesse dite « induite » et de la portance : cette puissance diminue en fonction de la vitesse d'avancement du giravion,

- la puissance de profil due à la traînée de profil des pales du rotor principal qui est variable suivant les profils de pales : elle croît en fonction de la vitesse d'avancement,

- la puissance de fuselage due à la traînée du fuselage : elle augmente rapidement en fonction de la vitesse, sensiblement comme cette vitesse à la puissance trois,

- les pertes de puissance dues notamment à la transmission de puissance de la motorisation aux rotors principal et arrière, au refroidissement, à l'entraînement des accessoires : ces pertes de puissances augmentent avec la vitesse d'avancement du giravion.

Alors, le premier régime de vitesse s'applique lorsque la vitesse conventionnelle VC du giravion est supérieure à la vitesse $V_Y$ de puissance minimale. Il est caractérisé par une augmentation de la puissance avec la vitesse par rapport à l'air et correspond à des vols stabilisés.

A contrario, le deuxième régime de vitesse s'applique en dessous de cette vitesse de puissance minimale. Il est caractérisé par une instabilité de vol des giravions. Dans ce deuxième régime de vitesse, la vitesse conventionnelle est basse et la puissance augmente quand la vitesse du giravion diminue. Les mesures anémométriques sont alors de moins en moins fiables quand la vitesse d'avancement du giravion diminue. De plus, la vitesse verticale instantanée mesurée est approximative comme vu précédemment en raison du retard lié à l'inertie d'un variomètre.

Par ailleurs, un phénomène dit d'« ascendance » peut fausser l'interprétation des indications données par un variomètre.

D'ordinaire, le phénomène d'ascendance est un phénomène naturel de déplacement d'air vers une altitude plus élevée.

Ainsi, lorsque le pilote fait cabrer le giravion, même légèrement, et voire instinctivement, sans toutefois modifier la puissance motrice instantanée (énergie) du giravion, le variomètre indique une vitesse verticale positive dans un tout premier temps.

En effet, à court terme, l'assiette longitudinale du fuselage augmente et le giravion tend à monter. Or, l'énergie totale du giravion est la somme de son énergie cinétique et de son énergie potentielle. Comme la puissance est maintenue constante, l'énergie potentielle augmentant, l'énergie cinétique diminue de sorte que le giravion ralentit.

Or, le pilote ne se rend pas compte de la perte de vitesse du giravion car il croit profiter du phénomène naturel d'ascendance. Le pilote ne peut donc remédier à cette perte de vitesse par une augmentation de la puissance du giravion.

De plus, ce ralentissement dans le domaine du deuxième régime de vitesse s'accompagne, comme vu ci-dessus, d'une augmentation de puissance nécessaire.

Dès lors, la vitesse verticale chute subitement de manière à devenir fortement négative, le pilote n'ayant pas augmenté la puissance nécessaire comme requis en raison de la diminution de la vitesse d'avancement. Le giravion amorce donc une descente rapide, voire dangereuse, et imprévisible de la part du pilote puisque le variomètre affichait, quelques instants auparavant, une vitesse verticale positive.

En outre, lors de vols sans visibilité, le pilote doit faire entièrement confiance aux informations fournies par les instruments à sa disposition sur le tableau de bord, entre autres, la vitesse verticale du giravion. Si une situation d'urgence se présente, le pilote peut être amené à réagir avec précipitation. Cette réaction précipitée peut de surcroît être accentuée du fait de la disponibilité tardive des dites informations. Le pilote peut alors exécuter des erreurs de manoeuvre pouvant conduire à un accident. Telle peut être la situation si le pilote, craignant la présence d'un obstacle à proximité, agit involontairement et par réflexe sur le manche de pas cyclique sans augmenter la puissance motrice. Il en résulte alors une légère assiette à cabrer du giravion puis une perte d'altitude rapide extrêmement dangereuse si le giravion évolue près du sol ou de l'eau.

Par ailleurs, on note que le document EP0006773 présente un procédé pour déterminer une vitesse prédictive d'un aérodyne.

La présente invention a pour objet de remédier à ces inconvénients et propose un procédé d'obtention d'une vitesse verticale prédictive d'un giravion permettant d'avoir à disposition les informations pertinentes pour contrôler sereinement et en toute sécurité l'appareil quelles que soient les conditions extérieures. En particulier, ce procédé est mis en oeuvre par un variomètre adapté à ce besoin, appelé variomètre prédictif dans ce texte.

Selon l'invention, le procédé d'obtention d'une vitesse verticale prédictive $v_{AP}$ d'un giravion, à savoir la vitesse verticale évaluée que va atteindre le giravion après un temps donné sans modification de sa trajectoire, est remarquable en ce que l'on effectue successivement les étapes suivantes :

a) on mesure la vitesse verticale instantanée v du giravion,

b) on détermine une vitesse verticale corrective $v_{CORR}$ dépendant d'un terme prédictif,

c) on additionne la vitesse verticale corrective à la vitesse verticale instantanée pour obtenir ladite vitesse verticale prédictive $v_{AP}$.

De ce fait, le pilote a accès à une vitesse verticale prédictive lui permettant d'anticiper sur les manoeuvres nécessaires à réaliser afin d'éviter tout engagement du giravion dans une situation critique.

De préférence, la vitesse verticale instantanée v est fournie par un variomètre classique qui restitue, selon l'invention, la vitesse verticale prédictive à l'indicateur dudit variomètre, transformé en un variomètre prédictif.

Ainsi, le procédé d'obtention d'une vitesse verticale prédictive permet d'avoir une fenêtre temporelle de sécurité durant laquelle le pilote peut anticiper les actions correctives adaptées aux situations annoncées.

En outre, cette anticipation prend en compte le retard inhérent au fonctionnement intrinsèque de l'instrumentation de bord à savoir le variomètre et éventuellement l'anémomètre.

Une fenêtre temporelle d'anticipation, correspondant au temps nécessaire au pilote pour effectuer une manoeuvre, est prédéterminée. Ce temps est évalué par l'homme du métier sensiblement à dix secondes.

Au cours de l'étape b), durant une étape b1), on détermine une première correction de la mesure de la vitesse verticale instantanée v en fonction de la vitesse propre instantanée $V_P$, la vitesse propre prédictive $V_{PP}$, la vitesse $V_Y$ de puissance minimale, la vitesse verticale instantanée v mesurée par un variomètre et une constante caractéristique k du giravion d'un type donné de giravion.

Cette constante caractéristique k est déterminée grâce à des essais et à partir d'une approximation linéaire qui correspond à un rapport de proportionnalité entre puissances et vitesse verticale du giravion, indépendant de la masse du giravion, tel que :

$$v = k\left(\frac{W}{W_n} - 1\right)$$

avec l'approximation :

$$\frac{W_n}{Wv_Y} = 2 - \frac{V_P}{V_Y}$$

Dans ces relations, on désigne par $Wv_Y$ et $W_n$ les puissances nécessaires pour voler en palier respectivement à la vitesse $V_Y$ de puissance minimale et à la vitesse propre $V_P$, et par W la puissance disponible instantanée du giravion.

Sur cette base et en premier lieu, on détermine un terme prédictif applicable à la vitesse verticale instantanée v et valant :

$$C_{P1} = (v + k)\frac{V_{PP} - V_P}{2V_Y - V_{PP}}$$

Dans le cadre de cette première correction, il est prévu éventuellement en deuxième lieu durant une étape b1') de pondérer le terme prédictif par un premier coefficient pondérateur A déterminé par des essais relatifs à chaque type de giravion. Ce premier coefficient pondérateur est généralement proche de l'unité.

Le terme prédictif pondéré $C_{PP1}$ s'écrit donc :

$$C_{PP1} = A \times C_{P1}$$

En effet, il est théoriquement inutile d'introduire ce premier coefficient de pondération qui est théoriquement égal à une unité.

Toutefois, la spécificité de chaque giravion peut générer un léger écart avec la théorie. Par suite, l'invention prévoit éventuellement de réaliser des essais pour déterminer la valeur de ce premier coefficient de pondération, cette valeur étant légèrement différente de l'unité.

Le signe « x » correspond au symbole de multiplication.

Dans ces conditions, la première correction de la mesure de la vitesse verticale instantanée v est égale soit au terme prédictif $C_{P1}$ soit au terme prédictif pondéré $C_{PP1}$.

Il importe de noter que cette première correction ($C_{P1}$ ou $C_{PP1}$) n'est applicable que si les deux conditions suivantes sont remplies :

- la vitesse conventionnelle VC en vol de palier est inférieure à la vitesse $V_Y$ laquelle est voisine de 65kt (noeuds),
- la vitesse conventionnelle VC est décroissante.

Le procédé selon la présente invention peut comprendre de plus durant l'étape b), une étape b2) au cours de laquelle on détermine une deuxième correction de la vitesse verticale instantanée v.

Plus précisément, cette deuxième correction est destinée à compenser les éventuelles interprétations erronées des indications fournies par un variomètre. Compte tenu des explications susmentionnées, il s'agit d'annuler les variations de la vitesse verticale à très court terme indiquées par un variomètre, ces variations étant dues à une assiette à cabrer de l'aéronef et non à un effet présumé d'ascendance de l'écoulement. En d'autres termes, cette deuxième correction évite de laisser croire au pilote que le giravion peut continuer à prendre de l'altitude avec la puissance affichée.

La deuxième correction résulte du bilan énergétique supposé constant pendant la réduction de la vitesse du giravion à partir de la vitesse $V_Y$ de puissance minimale jusqu'au vol stationnaire.

Ce bilan énergétique s'exprime alors comme suit, CT étant une constante :

$$\frac{1}{2}mV_P{}^2 + mgh + \int W_n + \int W = CT$$

où m, h et g désignent respectivement la masse de l'aéronef, l'altitude de vol, et l'accélération de la pesanteur.

Alors et si les puissances W et $W_n$ restent constantes, une dérivation de la précédente expression conduit à la relation suivante où t désigne le temps :

$$\frac{dh}{dt} = -V_p\frac{dV_P}{dt}$$

Sur cette base et en premier lieu, on détermine un terme correctif applicable à la vitesse verticale et valant :

$$C_{P2} = V_P \frac{dV_P}{dt}$$

qui par définition s'oppose à la variation d'altitude $\frac{dh}{dt}$ du giravion.

Dans ces conditions, l'accélération instantanée de l'aéronef $\frac{dV_P}{dt}$ est avantageusement obtenue à partir d'une mesure d'accélération, par exemple relative à un accéléromètre disposé suivant l'axe longitudinal du giravion, plus précis que le résultat découlant du traitement de mesures anémométriques à basse vitesse.

Dans le cadre de cette deuxième correction, il est prévu éventuellement en deuxième lieu, durant une étape b2') de pondérer le terme correctif par un deuxième coefficient pondérateur B sensiblement égal à 0,5.

Le terme correctif pondéré $C_{PP2}$ s'écrit donc :

$$C_{PP2} = B \times C_{P2}$$

Le deuxième coefficient de pondération est arbitrairement fixé à 0,5. Toutefois, il pourrait être affiné par essais selon la sensibilité recherchée.

Par conséquent, la deuxième correction de la mesure de la vitesse verticale instantanée v est égale soit au terme correctif, soit au terme correctif pondéré.

Dans la mesure où d'une part la première correction est seulement appliquée et d'autre part les première et deuxième corrections sont appliquées simultanément, la vitesse verticale corrective $v_{CORR}$ dépend toujours du terme prédictif $C_{P1}$ et prend l'une des formes suivantes :

$$v_{CORR} = C_{P1}$$

ou

$$v_{CORR} = C_{PP1}$$

ou

$$v_{CORR} = C_{P1} + C_{P2}$$

ou

$$v_{CORR} = C_{P1} + C_{PP2}$$

ou

$$v_{CORR} = C_{PP1} + C_{P2}$$

ou

$$v_{CORR} = C_{PP1} + C_{PP2}$$

Par suite, la vitesse verticale prédictive $v_{AP}$, retenue à l'étape c) et présentée au pilote, est, selon le cas, telle que :

$$v_{AP} = v + C_{P1}$$

ou

$$v_{AP} = v + C_{PP1}$$

ou

$$v_{AP} = v + C_{P1} + C_{P2}$$

ou

$$v_{AP} = v + C_{P1} + C_{PP2}$$

ou

$$v_{AP} = v + C_{PP1} + C_{P2}$$

ou

$$v_{AP} = v + C_{PP1} + C_{PP2}$$

Bien évidemment, on rappelle que ces vitesses verticales prédictives ne sont portées à la connaissance du pilote que si les conditions suivantes sont réalisées :

- la vitesse conventionnelle VC en vol de palier est inférieure à la vitesse $V_Y$ laquelle est voisine de 65kt (noeuds),
- la vitesse conventionnelle VC est décroissante,

La connaissance de ces vitesses verticales prédictives permet au pilote d'un giravion de disposer d'informations opérationnelles prédictives qui offrent un effort moindre d'analyse et un confort temporel supplémentaire. Par conséquent, cet avantage permet de diminuer la probabilité de devoir gérer des situations d'urgence dans la précipitation et par suite d'améliorer fortement la sécurité.

Préférentiellement, la vitesse propre prédictive $V_{PP}$ est déterminée par la relation :

$$V_{PP} = V_P + \frac{dV_P}{dt}\,\Delta t$$

avec un espace temps $\Delta t$ avantageusement égal à 10 secondes.

Cette condition conduit à écrire la vitesse propre prévisionnelle dans 10 secondes de la façon suivante :

$$V_{P10} = V_P + \left(10 \times \frac{dV_P}{dt}\right)$$

A titre d'exemple, la vitesse verticale prédictive dans 10 secondes s'écrit alors comme ci-après dans le cas le plus général :

$$v_{AP} = v + A\left[ (v+k)\frac{V_{PP} - V_P}{2V_Y - V_{PP}} \right] + B\left(V_P \frac{dV_P}{dt}\right)$$

soit, si $\Delta t = 10$ secondes :

$$v_{AP} = v + A\,(v_{10} - v) + B\left(V_P \frac{dV_P}{dt}\right)$$

où :

$$v_{10} = v + (v + k)\,\frac{V_{P10} - V_P}{2V_Y - V_{P10}})$$

$v_{10}$ étant la vitesse verticale v prédictive dans 10 secondes, sans prise en compte du terme correctif ou du terme correctif pondéré.

La détermination de la vitesse propre instantanée $V_P$ selon au moins trois modes de réalisation de l'invention permet notamment de pallier à la perte de sensibilité à basse vitesse d'un anémomètre.

Selon le premier mode de réalisation de l'invention, on mesure la vitesse propre instantanée à partir d'un instrument connu sous l'appellation «Omni Directional Air Data System», parfois dénommé « ODAS », utilisé par exemple pour des hélicoptères militaires tels que l'appareil UH60 ou encore un dispositif similaire mis en oeuvre sur l'hélicoptère « DAUPHIN™ COAST GUARD », développé par la demanderesse.

Il s'agit de deux tubes de Pitot placés sur deux bras opposés d'une antenne tournante, centrée sur l'axe de rotation du rotor principal, au dessus du plan des pales.

Un tel dispositif a une sensibilité à peu près constante et peut fournir les deux composantes de la vitesse air dans le plan de rotation du dispositif, à l'exclusion de la troisième composante.

Le deuxième mode de réalisation de l'invention fait recours pour la mesure de la vitesse d'un aéronef, notamment d'un giravion à basse vitesse, à l'anémomètre décrit dans le document FR0607239 de la demanderesse.

Cet instrument comporte un bras tournant à vitesse constante muni de deux sondes de pression disposées à chacune de ses extrémités, chaque sonde ayant deux prises de pression symétriques par rapport au plan de rotation dudit bras, ce qui permet d'accéder aux trois composantes de la vitesse par rapport à l'air.

En conséquence, une telle anémométrie n'est plus un facteur limitant au niveau de la mesure des pressions statique et totale à basses vitesses et on obtient ainsi la vitesse propre du giravion avec une bonne précision à basse vitesse d'avancement avec ces deux dispositifs.

Le troisième mode de réalisation de l'invention est basé sur une hypothèse selon laquelle le vent ne change ni en intensité ni en direction pendant la réduction de la vitesse du giravion à partir de la vitesse $V_Y$ de puissance minimale jusqu'au vol stationnaire.

En effet, il est aisé de déterminer la vitesse du vent, à une vitesse conventionnelle supérieure à la vitesse de puissance minimale car dans ce premier régime de vitesse et comme déjà précisé, les informations d'origine anémométrique sont fiables. On a donc accès grâce à un anémomètre à la vitesse conventionnelle VC et à la vitesse propre $V_P$ après avoir effectué la correction barométrique selon la relation :

$$V_P = \frac{VC}{\sqrt{\sigma}}$$

Par contre, aux basses vitesses (VC<$V_Y$) et avec un équipement courant, la seule mesure de vitesse sol fiable est actuellement celle fournie par un GPS (« Global Positionning System » en langue anglaise). La vitesse $V_P$ ne peut plus donc résulter de la mesure anémométrique relative à la vitesse conventionnelle VC fournie par un anémomètre.

Selon l'invention, on détermine dans ce cas la vitesse du vent $\overrightarrow{V_W}$ au moment de la réduction de vitesse en dessous de $V_Y$ en soustrayant vectoriellement la vitesse sol fournie par le GPS de la vitesse $\overrightarrow{V_P}$ résultant de la mesure anémométrique. Cette vitesse $\overrightarrow{V_W}$ est supposée rester constante pendant l'approche du giravion durant laquelle sa vitesse diminue de $V_Y$ à zéro, de sorte que la vitesse propre $\overrightarrow{V_P}$ est alors estimée égale à la somme vectorielle

8

$\overrightarrow{V_S} + \overrightarrow{V_W}$, $\overrightarrow{V_S}$ étant la vitesse sol instantanée issue du GPS dans l'ensemble du deuxième régime. La vitesse conventionnelle VC correspondante sera ainsi égale à $V_P \sqrt{\sigma}$.

On obtient ainsi la vitesse propre $V_P$ du giravion quelle que soit sa vitesse de vol. Cependant, il est à noter que la vitesse propre $V_P$ déterminée dans ce troisième mode de réalisation de l'invention est essentiellement bidimensionnelle du fait que la vitesse sol fournie par le GPS est aussi bidimensionnelle.

Avantageusement, la mise en oeuvre de ce procédé dans un giravion, permettant de prendre connaissance de la vitesse verticale prédictive, soulage le pilote et l'équipage (meilleures informations opérationnelles, confort temporel) et diminue la probabilité de devoir gérer des situations d'urgence dans la précipitation.

L'invention a également pour objet un variomètre prédictif pour l'obtention d'une vitesse verticale prédictive d'un giravion mettant en oeuvre le procédé présenté ci-dessus, et qui se caractérise en ce qu'il comprend :

- un premier moyen pour mesurer la vitesse verticale instantanée v d'un giravion,

- un deuxième moyen pour mesurer la vitesse propre instantanée $V_P$ d'un giravion,

- un troisième moyen pour calculer la vitesse verticale prédictive $v_{AP}$ d'un giravion, ce troisième moyen étant d'une part relié aux premier et deuxième moyens respectivement par une première $\ell 1$ et une deuxième $\ell 2$ liaisons.

Avantageusement, la vitesse verticale prédictive $v_{AP}$, élaborée par le troisième moyen est affichée, via une troisième liaison $\ell 3$ au dit premier moyen.

Par ailleurs et de préférence, ce premier moyen est un variomètre classique.

En outre, le deuxième moyen est de façon avantageuse mais non exclusivement soit un anémomètre selon les deux premiers modes de réalisation précités, soit un GPS selon le troisième mode de réalisation. Dans ce dernier cas, la vitesse propre correspond à la somme vectorielle de la vitesse fournie par le GPS et de la vitesse du vent obtenue par différence de la vitesse propre et de la vitesse donnée par le GPS quand la vitesse conventionnelle est égale ou supérieure à la vitesse de puissance minimale.

Le troisième moyen est un calculateur élaborant la vitesse verticale prédictive $v_{AP}$ à partir des informations suivantes relatives au giravion :

- la vitesse verticale instantanée,

- la vitesse propre instantanée,

- les valeurs prédéterminées de la vitesse $V_Y$ de puissance minimale et d'une constante caractéristique k, à savoir la constante caractéristique décrite précédemment dans le cadre du procédé revendiqué, qui sont des constantes pour un giravion d'un type donné de giravion, ainsi que les constantes A et B précédemment présentées.

En outre, le variomètre prédictif selon l'invention comprend avantageusement et de façon optionnelle un quatrième moyen pour mesurer l'accélération instantanée du giravion.

Ce quatrième moyen est relié au troisième moyen par une liaison $\ell 4$.

De préférence, le quatrième moyen est un accéléromètre disposé selon l'axe longitudinal du giravion.

L'invention et ses avantages apparaîtront avec plus de détails dans le cadre de la description suivante qui illustre des exemples de réalisation préférés, donnés sans aucun caractère limitatif, en référence aux figures annexées qui représentent :

- la figure 1, un schéma de présentation du dispositif selon l'invention,

- la figure 2, un schéma synoptique des étapes d'exécution du procédé selon l'invention.

Les éléments présents dans plusieurs figures distinctes sont affectés d'une seule et même référence.

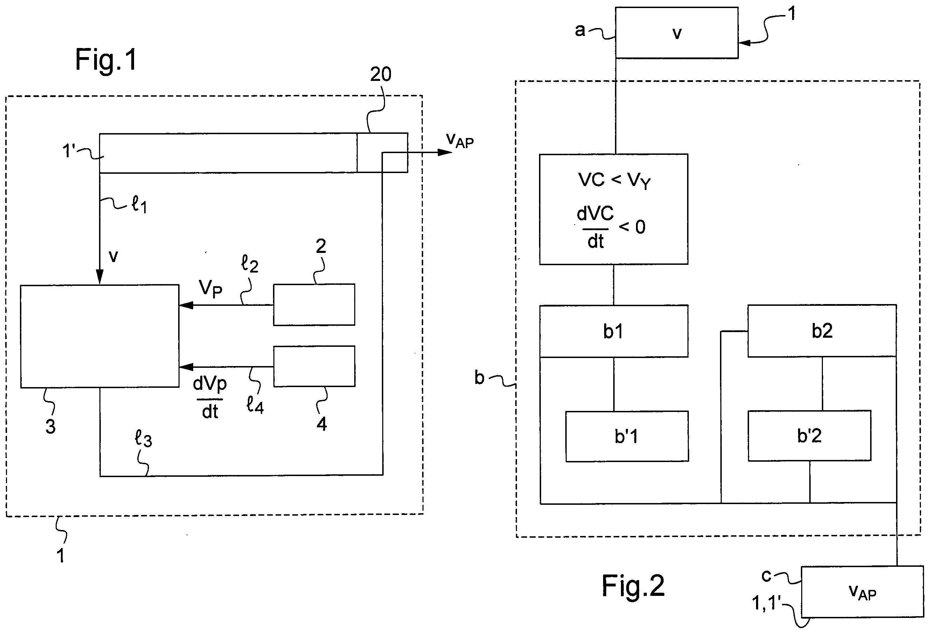

Le variomètre prédictif 1, représenté schématiquement sur la figure 1 et conforme à l'invention, est destiné à déterminer une vitesse verticale prédictive $v_{AP}$ d'un giravion. Ce variomètre prédictif 1 fonctionne à partir d'un premier moyen 1' constitué de préférence par un variomètre classique et présente au pilote la vitesse verticale prédictive $v_{AP}$ sur l'indicateur 20 de ce variomètre classique.

Pour ce faire, la vitesse verticale instantanée v, mesurée par un variomètre 1' est transmise par une première liaison $\ell 1$ à un troisième moyen 3 à savoir un calculateur, lequel après un traitement numérique approprié élabore, si besoin, une vitesse verticale prédictive $v_{AP}$, transmise via une troisième liaison $\ell 3$ à l'indicateur 20 sur lequel elle s'affiche.

Par ailleurs, le variomètre prédictif 1 comprend également un deuxième moyen 2 pour mesurer la vitesse propre $V_P$ instantanée d'un giravion, ce deuxième moyen étant relié au troisième moyen 3 par une deuxième liaison $\ell 2$.

Selon trois principaux modes de réalisation de l'invention, le deuxième moyen 2 correspond aux instruments suivants :

- soit à un « Omni Directional Air Data System », selon le premier mode de réalisation,

- soit à un anémomètre tel que décrit dans le document FR 0607239, selon le deuxième mode de réalisation,

- soit à un GPS, de sorte que si la vitesse conventionnelle VC du giravion est inférieure à la vitesse $V_Y$ de puissance minimale, la vitesse propre $V_P$ du giravion correspond à la somme vectorielle de la vitesse sol $\overrightarrow{V_S}$ fournie par le GPS et de la vitesse du vent $\overrightarrow{V_W}$ obtenue par différence entre la vitesse propre donnée par un anémomètre et la vitesse donnée par le GPS quand la vitesse conventionnelle VC est égale à la vitesse $V_Y$ de puissance minimale, sachant que $VC = V_P \sqrt{\sigma}$ avec $\sigma$ égal à la densité relative de l'air ambiant (quotient de la masse volumique $\rho$ de l'air à l'altitude considérée par la masse volumique de l'air $\rho_0$ au sol en « atmosphère standard »).

Bien entendu, on peut envisager tout autre instrument de mesure de la vitesse propre, sans pour autant sortir du cadre de la présente invention.

Par ailleurs, le troisième moyen 3 contient en mémoire les valeurs prédéterminées de la vitesse $V_Y$ de puissance minimale et d'une constante caractéristique k, qui sont des constantes pour un giravion d'un type donné de giravion, ainsi que les constantes A et B précédemment présentées.

De plus, un quatrième moyen 4 est nécessaire pour déterminer de façon optionnelle l'accélération instantanée $\dfrac{dV_P}{dt}$ du giravion (t=temps). De préférence mais non exclusivement, il s'agit d'un accéléromètre disposé selon l'axe longitudinal du giravion. Ce quatrième moyen 4 est relié au troisième moyen 3 par une quatrième liaison $\ell 4$.

La vitesse verticale $v_{AP}$ élaborée par le troisième moyen 3 est affichée sur l'indicateur 20 du premier moyen 1' via une troisième liaison $\ell 3$.

Dans ces conditions, ledit variomètre prédictif 1 met en oeuvre le procédé schématisé par la figure 2.

Ainsi le procédé d'obtention d'une vitesse verticale prédictive $v_{AP}$ d'un giravion est remarquable en ce que l'on effectue successivement les étapes suivantes :

a) on mesure la vitesse verticale instantanée v du giravion,

b) on détermine une vitesse verticale corrective $v_{CORR}$,

c) on additionne la vitesse verticale corrective $v_{CORR}$ à la vitesse verticale instantanée v pour obtenir ladite vitesse verticale prédictive $v_{AP}$.

Avantageusement, on mesure la vitesse verticale instantanée v grâce à un variomètre 1'.

Plus précisément, au cours de l'étape b), durant une étape b1), on détermine une première correction de la mesure de la vitesse verticale instantanée v en fonction de la vitesse propre instantanée $V_P$, la vitesse propre prédictive $V_{PP}$, la vitesse de puissance minimale $V_Y$, la vitesse verticale instantanée v mesurée par un variomètre et une constante caractéristique k du giravion d'un type donné de giravion.

Cette constante caractéristique k est déterminée grâce à des essais et à partir d'une approximation linéaire qui correspond à un rapport de proportionnalité entre puissances et vitesse verticale du giravion, indépendant de la masse de ce giravion, tel que :

$$v = k\left(\frac{W}{W_n} - 1\right)$$

Dans cette relation, on désigne par $W_n$ la puissance nécessaire pour voler en palier à la vitesse propre $V_P$, et par W la puissance disponible instantanée du giravion.

Cette première correction, n'est applicable que si les deux conditions suivantes sont remplies :

- la vitesse conventionnelle VC en vol de palier est inférieure à la vitesse $V_Y$ laquelle est voisine de 65kt (noeuds),

- la vitesse conventionnelle VC est décroissante

Sur cette base et en premier lieu, on détermine un terme correctif prédictif $C_{P1}$ applicable à la vitesse verticale v et valant :

$$C_{P1} = (v + k)\frac{V_{PP} - V_P}{2V_Y - V_{PP}}$$

Dans le cadre de cette première correction, il est prévu éventuellement en deuxième lieu durant une étape b1') de pondérer le terme prédictif $C_{P1}$ par un premier coefficient pondérateur A déterminé par des essais relatifs à chaque type de giravion. Ce premier coefficient pondérateur est généralement proche de l'unité.

Le terme prédictif pondéré $C_{PP1}$ s'écrit donc :

$$C_{PP1} = A \times C_{P1}$$

Dans ces conditions, la première correction de la mesure de la vitesse verticale instantanée v est égale soit au terme prédictif $C_{P1}$ soit au terme prédictif pondéré $C_{PP1}$.

Le procédé selon la présente invention peut comprendre de plus durant l'étape b), une étape b2) au cours de laquelle on détermine une deuxième correction de la vitesse verticale instantanée v.

Sur cette base et en premier lieu, on détermine un terme correctif $C_{P2}$ applicable à la vitesse verticale v par la relation suivante où t désigne le temps:

$$C_{P2} = V_P \frac{dV_P}{dt}$$

qui par définition s'oppose à la variation d'altitude $\frac{dh}{dt}$ du giravion si le bilan de puissance est supposé momentanément égal à une constante CT conformément à la relation :

$$\frac{1}{2}mV_P{}^2 + mgh + \int Wn + \int W = CT$$

les deux premières expressions désignant respectivement l'énergie cinétique et l'énergie potentielle relatives au giravion.

Dans le cadre de cette deuxième correction, il est prévu éventuellement en deuxième lieu, durant une étape b2') de pondérer le terme correctif $C_{P2}$ par un deuxième coefficient pondérateur B sensiblement égal à 0,5.

Le terme correctif pondéré $C_{PP2}$ s'écrit donc :

$$C_{PP2} = B \times C_{P2}$$

Par conséquent, la deuxième correction de la mesure de la vitesse verticale instantanée v est égale soit au terme correctif $C_{P2}$, soit au terme correctif pondéré $C_{PP2}$.

Dans la mesure où d'une part la première correction est seulement appliquée et d'autre part les première et deuxième corrections sont appliquées simultanément, la vitesse verticale corrective $v_{CORR}$ prend l'une des formes suivantes :

$$v_{CORR} = C_{P1}$$

ou

$$v_{CORR} = C_{PP1}$$

ou

$$v_{CORR} = C_{P1} + C_{P2}$$

ou

$$v_{CORR} = C_{P1} + C_{PP2}$$

ou

$$v_{CORR} = C_{PP1} + C_{P2}$$

ou

$$v_{CORR} = C_{PP1} + C_{PP2}$$

Par suite, la vitesse verticale prédictive $v_{AP}$, retenue à l'étape c et présentée au pilote, est, selon le cas, telle que :

$$v_{AP} = v + C_{P1}$$

ou

$$v_{AP} = v + C_{PP1}$$

ou

$$v_{AP} = v + C_{P1} + C_{P2}$$

ou

$$v_{AP} = v + C_{P1} + C_{PP2}$$

ou

$$v_{AP} = v + C_{PP1} + C_{P2}$$

ou

$$v_{AP} = v + C_{PP1} + C_{PP2}$$

Préférentiellement, la vitesse propre prédictive $V_{PP}$ est déterminée par la relation :

$$V_{PP} = V_P + \frac{dV_P}{dt}\,\Delta t$$

avec un espace temps $\Delta t$ avantageusement égal à 10 secondes.

Cette condition conduit à écrire la vitesse propre prévisionnelle dans 10 secondes de la façon suivante :

$$V_{P10} = V_P + (10 \times \frac{dV_P}{dt})$$

A titre d'exemple, la vitesse verticale prédictive dans 10 secondes s'écrit alors comme ci-après dans le cas le plus général :

$$v_{AP} = v + A[\,(v+k)\frac{V_{PP} - V_P}{2V_Y - V_{PP}}] + B(V_P\frac{dV_P}{dt})$$

soit, si $\Delta t = 10$ secondes :

$$v_{AC} = v + A\,(v_{10} - v) + B(V_P\frac{dV_P}{dt})$$

où :

$$v_{10} = v + (v + k)\,\frac{V_{P10} - V_P}{2V_y - V_{P10}})$$

$v_{10}$ étant la vitesse verticale v prédictive dans 10 secondes.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Dans la mesure où il est envisagé d'améliorer la précision des vitesses prédictives, une expérimentation spécifique est effectuée en vol avec le giravion concerné d'un type particulier de giravion, pour déterminer avec précision les premier et deuxième coefficients pondérateurs A et B au lieu de les fixer à des valeurs arbitraires respectives de 1 et 0,5 par exemple.

En pratique, et selon un protocole préféré, ledit giravion concerné se déplaçant sensiblement à la vitesse $V_Y$ de puissance minimale et éventuellement en cours d'évolutions à vitesse verticale instantanée non nulle, un essai consiste à réduire, à partir d'une vitesse propre instantanée $V_p$ inférieure ou égale à $V_Y$ à un premier temps t, cette vitesse d'avancement de giravion tout en maintenant si possible constante la puissance motrice. De plus, on répète l'essai en imposant au giravion, à chaque essai, un niveau à peu près constant de décélération, étant entendu que d'une part ledit niveau de décélération peut être modifié d'un essai à l'autre et d'autre part que plusieurs essais peuvent être réalisés à un même niveau de décélération, ou encore à partir de différentes vitesses propres instantanées $V_p$ au premier temps t.

Chaque niveau de décélération est obtenu par un déplacement longitudinal du manche cyclique vers l'arrière du giravion par le pilote. Dans ces conditions, il en résulte une inclinaison du plateau cyclique donc du plan de rotation du rotor dans le sens à cabrer vers l'avant du giravion.

Cette action a pour effet d'imposer une décélération au giravion concerné.

Par ailleurs, chaque essai est poursuivi pendant une durée d'au moins dix secondes c'est-à-dire jusqu'à un deuxième temps (t + 10 secondes), cette durée de 10 secondes étant préférentiellement retenue pour la prédiction de la vitesse propre prévisionnelle Vpp écrite alors sous la forme $V_{p10}$.

Durant chaque essai, on enregistre par conséquent, pendant 10 secondes au moins, les mesures des quantités suivantes :

- la vitesse verticale instantanée v, au début de l'essai au premier temps t,

- la vitesse verticale v au deuxième temps (t + 10 secondes), égale de fait à la vitesse verticale $v_{AP}$ à un temps (t + 10 secondes),

- la vitesse propre instantanée $V_P$ au premier temps t,

- la décélération $\dfrac{dV_P}{dt}$

sachant que les quantités $v_y$ et k sont connues par ailleurs, comme des caractéristiques dudit type de giravion.

Par suite, on calcule les termes $C_{p1}$ et $C_{p2}$ pour chaque essai de telle sorte que l'on établit pour chaque essai une équation de la forme :

$$(A \times C_{p1}) + (B \times C_{P2}) = v_{AP} - v$$

ou : $v_{AP}$ est égale à la vitesse verticale v mesurée au deuxième temps (t + 10 secondes, et

v est égale à la vitesse verticale v mesurée au premier temps (t).

Il y a donc autant d'équations que d'essais, le système d'équations en résultant étant résolu par des méthodes numériques classiques qu'il n'est pas nécessaire de décrire présentement.

La résolution de ce système d'équations permet ainsi d'obtenir des premier et deuxième coefficients pondérateurs A et B.

Ces coefficients pondérateurs peuvent être exploités indifféremment à l'aide des relations suivantes décrites précédemment selon le cas d'expèce envisagé :

$$v_{AP} = v + C_{PP1} \text{ (coefficient A seul utilisé)}$$

$$v_{AP} = v + C_{Pp2} \text{ (coefficient B seul utilisé)}$$

$$v_{AP} = v + C_{P1} + C_{PP2} \text{ (coefficient B seul utilisé)}$$

$$v_{AP} = v + C_{PP1} + C_{P2} \text{ (coefficient A seul utilisé)}$$

$$v_{AP} = v + C_{PP1} + C_{PP2} \text{ (coefficients A et B utilisés)}$$

**Revendications**

1. Procédé d'obtention d'une vitesse verticale prédictive $v_{AP}$ d'un giravion que va atteindre le giravion après un temps donné sans modification de sa trajectoire, les deux conditions suivantes étant remplies :

  - la vitesse conventionnelle (VC) en vol de palier étant inférieure à la vitesse (VY) de puissance minimale, et
  - la vitesse conventionnelle (VC) étant décroissante,

  **caractérisé en ce que** l'on effectue successivement les étapes suivantes :

  a) on mesure la vitesse verticale instantanée (v) du giravion,
  b) on détermine une vitesse verticale corrective ($v_{CORR}$) à l'aide d'au moins un terme prédictif ($C_{P1}$),
  c) on additionne la vitesse verticale corrective ($v_{CORR}$), à la vitesse verticale instantanée (v) pour obtenir ladite vitesse verticale prédictive ($v_{AP}$).

et **en ce que**, au cours de l'étape b), durant une étape b1) on détermine ledit terme prédictif ($C_{P1}$) tel que :

$$C_{P1} = (v + k)\frac{V_{PP} - V_P}{2V_Y - V_{PP}}$$

avec :

$V_P$ = vitesse propre instantanée du giravion,
$V_{PP}$ = vitesse propre prédictive du giravion déterminée par la relation suivante où t et $\Delta t$ désignent respectivement

le temps et un espace de temps : $V_{PP} = V_P + \dfrac{dV_P}{dt}\Delta t$,

$V_Y$ = vitesse prédéterminée de puissance minimale du giravion, d'un type donné de giravion,
k = constante caractéristique prédéterminé du giravion à partir d'une approximation linéaire qui correspond à un rapport de proportionnalité entre des puissances du giravion et sa vitesse verticale v,

la constante caractéristique k étant tel que :

$$v = k\left(\frac{W}{W_n} - 1\right)$$

avec l'approximation : $\dfrac{W_n}{Wv_Y} = 2 - \dfrac{V_P}{V_Y}$, $Wv_Y$ et $W_n$ étant les puissances nécessaires pour voler en palier respectivement à la vitesse $V_Y$ de puissance minimale et à la vitesse propre $V_P$, W étant la puissance disponible instantanée du giravion.

2. Procédé selon la revendication 1,
**caractérisé en ce que** durant une étape supplémentaire b1'), on détermine un terme prédictif pondéré ($C_{PP1}$), A étant un premier coefficient pondérateur déterminé par des essais relatifs à chaque type de giravion, tel que :

$$C_{PP1} = A \times C_{P1}$$

3. Procédé selon la revendication 1, **caractérisé en ce que** la vitesse verticale corrective ($v_{CORR}$) est égale au terme prédictif ($C_{P1}$) de sorte que la vitesse verticale prédictive ($v_{AP}$) est telle que :

$$v_{AP} = v + C_{P1}$$

4. Procédé selon la revendication 2,
**caractérisé en ce que** la vitesse verticale corrective ($v_{CORR}$) est égale au terme prédictif pondéré ($C_{PP1}$), de sorte que la vitesse verticale prédictive ($v_{AP}$) est telle que :

$$V_{AP} = v + C_{PP1}$$

5. Procédé selon l'une quelconque des revendications 1 à 2,
**caractérisé en ce que**, au cours de l'étape b), durant une étape b2), on détermine un terme correctif ($C_{P2}$) tel que :

$$C_{P2} = V_P\frac{dV_P}{dt}$$

$V_P$ désignant la vitesse instantanée du giravion et $\dfrac{dV_P}{dt}$ son accélération instantanée, t étant le temps.

6. Procédé selon la revendication 5,
**caractérisé en ce que**, ayant déterminé au cours d'une étape b1) un terme prédictif ($C_{P1}$), la vitesse verticale corrective ($v_{CORR}$) est égale à l'addition du terme correctif ($C_{P2}$) et du terme prédictif $C_{P1}$ de sorte que la vitesse verticale prédictive ($v_{AP}$) est telle que :

$$v_{AP} = v + C_{P1} + C_{P2}$$

7. Procédé selon la revendication 5, **caractérisé en ce que**, ayant déterminé au cours d'une étape supplémentaire b'1) un terme prédictif pondéré ($C_{PP1}$), la vitesse verticale corrective ($v_{CORR}$) est égale à l'addition du terme correctif ($C_{P2}$) et du terme prédictif pondéré ($C_{PP1}$) de sorte que la vitesse verticale prédictive ($v_{AP}$) est telle que :

$$v_{AP} = v + C_{PP1} + C_{P2}$$

8. Procédé selon la revendication 5,
**caractérisé en ce que** durant une étape supplémentaire b2'), on détermine un terme correctif pondéré ($C_{PP2}$), B étant un deuxième coefficient pondérateur, tel que :

$$C_{PP2} = B \times C_{P2}$$

9. Procédé selon la revendication 8,
**caractérisé en ce que** le deuxième coefficient pondérateur B est sensiblement égal à 0,5.

10. Procédé selon les revendications 8 ou 9,
**caractérisé en ce que**, ayant déterminé au cours d'une étape b1) un terme prédictif ($C_{P1}$), la vitesse verticale corrective ($v_{CORR}$) est égale à l'addition du terme prédictif ($C_{P1}$) et du terme correctif pondéré ($C_{PP2}$) de sorte que la vitesse verticale prédictive ($v_{AP}$) est telle que :

$$v_{AP} = v + C_{P1} + C_{PP2}$$

11. Procédé selon l'une quelconque des revendications 8 ou 9,
**caractérisé en ce que**, ayant déterminé au cours d'une étape supplémentaire b'1) un terme prédictif pondéré ($C_{PP1}$), la vitesse verticale corrective ($v_{CORR}$) est égale à l'addition du terme prédictif pondéré ($C_{PP1}$) et du terme correctif pondéré ($C_{PP2}$) de sorte que la vitesse verticale prédictive ($v_{AP}$) est telle que :

$$v_{AP} = v + C_{PP1} + C_{PP2}$$

12. Procédé selon la revendication 1,
**caractérisé en ce que** l'espace de temps ($\Delta t$) est de dix secondes.

13. Procédé selon l'une quelconque des revendications 1 à 12,
**caractérisé en ce que** si la vitesse conventionnelle (VC) du giravion, est inférieure à la vitesse ($V_Y$) de puissance minimale, on calcule la vitesse propre (VP) dudit giravion en faisant la somme vectorielle de la vitesse sol ($\overrightarrow{V_S}$) fournie par un GPS et de la vitesse du vent ($\overrightarrow{V_W}$) obtenue par différence entre la vitesse propre donnée par un anémomètre et la vitesse donnée par un GPS quand la vitesse conventionnelle (VC) est égale à la vitesse ($V_Y$) de puissance minimale.

**14.** Variomètre prédictif (1) pour l'obtention d'une vitesse verticale prédictive $v_{AP}$ d'un giravion mettant en oeuvre le procédé selon l'une quelconque des revendications précédentes, **caractérisé en ce qu'**il comprend :

- un premier moyen (1') pour mesurer la vitesse verticale instantanée v d'un giravion,
- un deuxième moyen (2) pour mesurer la vitesse propre Vp instantanée d'un giravion,
- un troisième moyen (3) pour calculer la vitesse verticale prédictive $v_{AP}$ d'un giravion, ce troisième moyen étant d'une part relié aux premier et deuxième moyens respectivement par une première ($\ell1$) et une deuxième ($\ell2$) liaisons et contenant en mémoire les valeurs prédéterminées de la vitesse ($V_Y$) de puissance minimale et d'une constante caractéristique (k) qui sont des constantes relatives au dit giravion, d'un type donné de giravion, k étant prédéterminé à partir d'une approximation linéaire qui correspond à un rapport de proportionnalité entre puissances et vitesse verticale du giravion, tel que tel que :

$$v = k\left(\frac{W}{W_n} - 1\right)$$

avec l'approximation : $\dfrac{W_n}{Wv_Y} = 2 - \dfrac{V_P}{V_Y}$ ,

$Wv_Y$ et $W_n$ étant les puissances nécessaires pour voler en palier respectivement à la vitesse $V_Y$ de puissance minimale et à la vitesse propre $V_P$, W étant la puissance disponible instantanée du giravion le troisième moyen (3) étant un calculateur élaborant la vitesse verticale prédictive $V_{PP}$ notamment à partir des informations suivantes relatives au giravion :

- la vitesse verticale instantanée v du giravion d'un type donné de giravion,
- la vitesse propre instantanée $V_P$ du giravion d'un type donné de giravion,
- la vitesse prédéterminée ($V_Y$) de puissance minimale du giravion d'un type donné du giravion,
- la constante caractéristique prédéterminée (k) du giravion d'un type donné du giravion,

un terme correctif prédictif $C_{P1}$, tel que $C_{P1} = (v + k)\dfrac{V_{PP} - V_P}{2V_Y - V_{PP}}$ , étant applicable à la vitesse verticale v.

**15.** Variomètre prédictif (1) selon la revendication 14, **caractérisé en ce qu'**il comprend de plus un quatrième moyen (4), relié au troisième moyen (3) par une quatrième liaison ($\ell4$), pour mesurer l'accélération instantanée $\left(\dfrac{dV_P}{dt}\right)$ dudit giravion.

**16.** Variomètre prédictif (1) selon l'une des revendications 14 ou 15, **caractérisé en ce que**, la vitesse verticale prédictive ($v_{AP}$) élaborée par le troisième moyen (3) est affichée via une troisième liaison ($\ell3$) sur l'indicateur (20) dudit premier moyen (1').

**17.** Variomètre prédictif (1) selon l'une quelconque des revendications 14 à 16, **caractérisé en ce que** le deuxième moyen (2) est un « Omni Directional Air Data System ».

**18.** Variomètre prédictif (1) selon l'une quelconque des revendications 14 à 16, **caractérisé en ce que** le deuxième moyen (2) est un anémomètre comportant un bras tournant à vitesse constante, muni de deux sondes de pression disposées chacune à une des extrémités dudit bras, chaque sonde ayant deux prises de pression symétriques par rapport au plan de rotation du bras.

**19.** Variomètre prédictif (1) selon l'une quelconque des revendications 14 à 16, **caractérisé en ce que** le deuxième moyen (2) est un GPS de telle sorte que si la vitesse conventionnelle (VC) du giravion est inférieure à la vitesse ($V_Y$) de puissance minimale, la vitesse propre ($V_P$) dudit giravion correspond à la somme sectorielle de la vitesse sol ($\overrightarrow{V_S}$) fournie par un GPS et de la vitesse du vent ($\overrightarrow{V_W}$) obtenue quant à elle par différence entre la vitesse donnée par un anémomètre et la vitesse donnée par un GPS quand la vitesse conventionnelle (VC) est égale à la vitesse ($V_Y$) de puissance minimale.

20. Variomètre prédictif (1) selon la revendication 15,
**caractérisé en ce que** le quatrième moyen (4) est un accéléromètre disposé selon l'axe longitudinal du giravion.

21. Variomètre prédictif (1) selon l'une quelconque des revendications 14 à 20,
**caractérisé en ce que** le troisième moyen (3) est un calculateur élaborant la vitesse verticale à partir des informations suivantes relatives au giravion :

- la vitesse verticale instantanée du giravion d'un type donné de giravion,
- la vitesse propre instantanée du giravion d'un type donné de giravion,
- l'accélération instantanée du giravion d'un type donné de giravion,
- la vitesse prédéterminée ($V_Y$) de puissance minimale du giravion d'un type donné de giravion, et
- une constante caractéristique (k) du giravion d'un type donné de giravion.

**Patentansprüche**

1. Verfahren zum Erhalten einer prognostischen vertikalen Geschwindigkeit $v_{AP}$ eines Drehflügel-Luftfahrzeugs, die das Drehflügel-Luftfahrzeug nach einer vorgegebenen Zeit ohne Änderung seiner Flugbahn erreichen wird, wobei die folgenden zwei Bedingungen erfüllt sind:

- die konventionelle Geschwindigkeit (VC) beim Horizontalflug ist kleiner als die Geschwindigkeit (VY) bei minimaler Leistung, und
- die konventionelle Geschwindigkeit (VC) nimmt ab,

**dadurch gekennzeichnet, dass** aufeinanderfolgend folgende Schritte ausgeführt werden:

a) die momentane vertikale Geschwindigkeit (v) des Drehflügelflugzeugs wird gemessen,
b) die vertikale Korrekturgeschwindigkeit ($v_{CORR}$) wird mit Hilfe mindestens eines prognostischen Ausdrucks ($C_{P1}$) bestimmt,
c) die vertikale Korrekturgeschwindigkeit ($v_{CORR}$) wird zu der momentanen vertikalen Geschwindigkeit (v) addiert, um die prognostische vertikale Geschwindigkeit ($V_{AP}$) zu erhalten,

und dadurch, dass im Verlauf des Schrittes b), während eines Schritts b1) der prognostische Ausdruck ($C_{P1}$) wie folgt bestimmt wird:

$$C_{P1} = (v + k)\frac{V_{PP}-V_P}{2V_Y-V_{PP}} \, ,$$

mit:

$V_P$ = momentane Eigengeschwindigkeit des Drehflügel-Luftfahrzeugs,
$V_{PP}$ = prognostische Eigengeschwindigkeit des Drehflügelflugzeugs, welche durch die folgende Beziehung bestimmt wird, in der t und $\Delta t$ die Zeit und einen Zeitraum bezeichnen:

$$V_{PP} = V_P + \frac{dV_P}{dt}\Delta t,$$

wobei:

$V_Y$ = vorbestimmte Geschwindigkeit bei minimaler Leistung des Drehflügelflugzeugs eines vorgegebenen Drehflügelflugzeugtyps,
k = charakteristische Konstante des Drehflügelflugzeugs, die vorbestimmt wird ausgehend von einer linearen Näherung, die einem Verhältnis der Proportionalität zwischen den Leistungen des Drehflügelflugzeugs und seiner vertikalen Geschwindigkeit v entspricht,

wobei die charakteristische Konstante k die Gleichung

$$v = k\left(\frac{W}{W_n} - 1\right),$$

erfüllt,

mit der Näherung: $\frac{W_n}{Wv_Y} = 2 - \frac{V_P}{V_Y}$ , wobei $Wv_Y$ und $W_n$ die notwendigen Leistungen für einen Horizontalflug sind, jeweils mit der Geschwindigkeit $V_Y$ bei minimaler Leistung und mit der Eigengeschwindigkeit $V_P$, wobei W die momentan verfügbare Leistung des Drehflügelflugzeugs ist.

**2.** Verfahren nach Anspruch 1,
**dadurch gekennzeichnet, dass** während eines zusätzlichen Schrittes b1') ein gewichteter prognostischer Ausdruck ($C_{PP1}$) bestimmt wird, wobei A ein erster Wichtungskoeffizient ist, der durch Versuche bezüglich eines jeden Typs von Drehflügelflugzeugen derart bestimmt wird, dass folgende Gleichung gilt:

$$C_{PP1} = A \times C_{P1}.$$

**3.** Verfahren nach Anspruch 1,
**dadurch gekennzeichnet, dass** die vertikale Korrekturgeschwindigkeit ($v_{CORR}$) gleich dem prognostischen Ausdruck ($C_{P1}$) ist, derart, dass die vertikale prognostische Geschwindigkeit ($V_{AP}$) die Gleichung :

$$v_{AP} = v + C_{P1}$$

erfüllt.

**4.** Verfahren nach Anspruch 2,
**dadurch gekennzeichnet, dass** die vertikale Korrekturgeschwindigkeit ($v_{CORR}$) gleich dem gewichteten prognostischen Ausdruck ($C_{PP1}$) ist, derart, dass die prognostische vertikale Geschwindigkeit ($v_{AP}$) folgende Gleichung erfüllt:

$$V_{AP} = v + C_{PP1}.$$

**5.** Verfahren nach einem der Ansprüche 1 bis 2,
**dadurch gekennzeichnet, dass** im Verlauf des Schrittes b), während eines Schrittes b2), ein Korrekturausdruck ($C_{P2}$) bestimmt wird, derart, dass folgende Gleichung :

$$C_{P2} = V_P \frac{dV_P}{dt}$$

erfüllt ist, wobei

$V_P$ die momentane Geschwindigkeit des Drehflügelflugzeugs bezeichnet und $\frac{dV_P}{dt}$ seine momentane Beschleunigung, wobei t die Zeit bezeichnet.

**6.** Verfahren nach Anspruch 5,
**dadurch gekennzeichnet, dass**, nachdem während eines Schrittes b1) ein prognostischer Ausdruck ($C_{P1}$) bestimmt wurde, die vertikale Korrekturgeschwindigkeit ($v_{CORR}$) gleich einer Summe aus dem Korrekturausdruck ($C_{P2}$) und einem prognostischen Ausdruck $C_{P1}$ ist, derart, dass die prognostische vertikale Geschwindigkeit ($v_{AP}$) folgende Gleichung erfüllt:

$$v_{AP} = v + C_{P1} + C_{P2}.$$

**7.** Verfahren nach Anspruch 5,
**dadurch gekennzeichnet, dass**, nachdem während eines zusätzlichen Schrittes b'1) ein gewichteter prognostischer Ausdruck ($C_{PP1}$) bestimmt wurde, die vertikale Korrekturgeschwindigkeit ($v_{CORR}$) gleich einer Summe aus dem Korrekturausdruck ($C_{P2}$) und dem gewichteten prognostischen Ausdrucks ($C_{PP1}$) ist, derart, dass die prognostische vertikale Geschwindigkeit ($v_{AP}$) folgende Gleichung erfüllt:

$$v_{AP} = v + C_{PP1} + C_{P2}.$$

**8.** Verfahren nach Anspruch 5,
**dadurch gekennzeichnet, dass** während eines zusätzlichen Schrittes b2') ein gewichteter Korrekturausdruck ($C_{PP2}$) bestimmt wird, wobei B ein zweiter Wichtungskoeffizient ist, derart, dass folgende Gleichung erfüllt ist:

$$C_{PP2} = B \times C_{P2}.$$

**9.** Verfahren nach Anspruch 8,
**dadurch gekennzeichnet, dass** der zweite Wichtungskoeffizient B ungefähr gleich 0,5 ist.

**10.** Verfahren nach den Ansprüchen 8 oder 9,
**dadurch gekennzeichnet, dass**, nachdem im Verlauf eines Schrittes b1) ein prognostischer Ausdruck ($C_{P1}$) bestimmt wurde, die vertikale Korrekturgeschwindigkeit ($v_{CORR}$) gleich einer Summe aus dem prognostischen Ausdruck ($C_{P1}$) und einem gewichteten Korrekturausdruck ($C_{PP2}$) ist, derart, dass die prognostische vertikale Geschwindigkeit ($v_{AP}$) folgende Gleichung erfüllt:

$$v_{AP} = v + C_{P1} + C_{PP2}.$$

**11.** Verfahren nach einem der Ansprüche 8 oder 9,
**dadurch gekennzeichnet, dass**, nachdem im Verlauf eines zusätzlichen Schrittes b'1) ein gewichteter prognostischer Ausdruck ($C_{PP1}$) bestimmt wurde, die vertikale Korrekturgeschwindigkeit ($v_{CORR}$) gleich einer Summe aus dem gewichteten prognostischen Ausdruck ($C_{PP1}$) und dem gewichteten Korrekturausdruck ($C_{PP2}$) ist, sodass die prognostische vertikale Geschwindigkeit ($v_{AP}$) folgende Gleichung erfüllt:

$$v_{AP} = v + C_{PP1} + C_{PP2}.$$

**12.** Verfahren nach Anspruch 1,
**dadurch gekennzeichnet, dass** der Zeitraum ($\Delta t$) zehn Sekunden beträgt.

**13.** Verfahren nach einem der Ansprüche 1 bis 12,
**dadurch gekennzeichnet, dass**, wenn die konventionelle Geschwindigkeit (VC) des Drehflügelflugzeugs kleiner als die Geschwindigkeit ($V_Y$) bei minimaler Leistung ist, die Eigengeschwindigkeit (VP) des Drehflügelflugzeugs berechnet wird durch Bilden der Vektorsumme der Geschwindigkeit über dem Boden ($\overrightarrow{V_S}$), die von einem GPS geliefert wird, und der Windgeschwindigkeit ($\overrightarrow{V_W}$), die erhalten wird aus der Differenz zwischen der Eigengeschwindigkeit, die von einem Anemometer geliefert wird, und der von einem GPS gelieferten Geschwindigkeit, wenn die konventionelle Geschwindigkeit (VC) gleich der Geschwindigkeit ($V_Y$) bei minimaler Leistung ist.

**14.** Prognostisches Variometer (1) zum Erreichen einer prognostischen Vertikalgeschwindigkeit $v_{AP}$ eines Drehflügelflugzeugs, welches das Verfahren nach einem der vorstehenden Ansprüche ausführt, **dadurch gekennzeichnet, dass** es aufweist:

- ein erstes Mittel (1') zum Messen der momentanen vertikalen Geschwindigkeit eines Drehflügelflugzeugs,

- ein zweites Mittel (2) zum Messen der momentanen Eigengeschwindigkeit $V_P$ eine Drehflügelflugzeugs,
- ein drittes Mittel (3) zum Berechnen der prognostischen Vertikalgeschwindigkeit $v_{AP}$ eines Drehflügelflugzeugs, wobei das dritte Mittel einerseits jeweils mit dem ersten und dem zweiten Mittel durch eine erste ($\ell$1) und eine zweite ($\ell$2) Verbindung verbunden ist und in einem Speicher vorbestimmte Werte der Geschwindigkeit ($V_Y$) bei minimaler Leistung und eine charakteristische Konstante (k) gespeichert hat, die das entsprechende Drehflügelflugzeug eines vorgegebenen Drehflügelflugzeugtyps betreffen, wobei k ausgehend von einer linearen Näherung vorbestimmt ist, die einem Verhältnis der Proportionalität zwischen Leistungen und der vertikalen Geschwindigkeit des Drehflügelflugzeugs entspricht, derart, dass die Gleichung:

$$v = k\left(\frac{W}{W_n} - 1\right)$$

erfüllt ist,

mit der Näherung: $\frac{W_n}{Wv_Y} = 2 - \frac{V_P}{V_Y}$ , wobei $Wv_Y$ und $W_n$ die notwendigen Leistungen für einen Horizontalflug sind, jeweils mit der Geschwindigkeit $V_Y$ bei minimaler Leistung und mit der Eigengeschwindigkeit $V_P$, wobei W die momentan verfügbare Leistung des Drehflügelflugzeugs ist, wobei das dritte Mittel (3) ein Rechner ist, der die prognostische vertikale Geschwindigkeit $V_{PP}$, insbesondere ausgehend von den folgenden das Drehflügelflugzeug betreffenden Informationen, errechnet:

- der momentanen vertikalen Geschwindigkeit v des Drehflügelflugzeugs von einem vorgegebenen Drehflügelflugzeugtyp,
- der momentanen Eigengeschwindigkeit $V_P$ des Drehflügelflugzeugs von einem vorgegebenen Drehflügelflugzeugtyp,
- der vorbestimmten Geschwindigkeit ($V_Y$) bei minimaler Leistung des Drehflügelflugzeugs von einem vorgegebenen Drehflügelflugzeugtyp,
- der vorbestimmten charakteristischen Konstanten (k) des Drehflügelflugzeugs von einem vorgegebenen Drehflügelflugzeugtyp, wobei ein prognostischer Korrekturausdruck ($C_{P1}$), wie

$$C_{P1} = (v + k)\frac{V_{PP} - V_P}{2V_Y - V_{PP}}$$ , auf die vertikale Geschwindigkeit v anwendbar ist.

15. Prognostisches Variometer (1) nach Anspruch 14, **dadurch gekennzeichnet, dass** es außerdem ein viertes Mittel (4) aufweist, das mit dem dritten Mittel (3) über eine vierte Verbindung ($\ell$4) verbunden ist, um die momentane Beschleunigung ($\frac{dV_P}{dt}$) des Drehflügelflugzeugs zu messen.

16. Prognostisches Variometer (1) nach einem der Ansprüche 14 oder 15, **dadurch gekennzeichnet, dass** die von dem dritten Mittel (3) erstellte prognostische vertikale Geschwindigkeit ($v_{AP}$) über eine dritte Verbindung ($\ell$3) auf dem Anzeigegerät (20) des ersten Mittels (1') angezeigt wird.

17. Prognostisches Variometer (1) nach einem der Ansprüche 14 bis 16, **dadurch gekennzeichnet, dass** das zweite Mittel (2) ein "Omni Directional Air Data System" ist.

18. Prognostisches Variometer (1) nach einem der Ansprüche 14 bis 16, **dadurch gekennzeichnet, dass** das zweite Mittel (2) ein Anemometer ist, welches einen sich mit einer konstanten Geschwindigkeit drehenden Arm aufweist, der mit zwei Drucksensoren versehen ist, die jeweils an einem der Enden des Arms angeordnet sind, wobei jede Sonde zwei relativ zu der Rotationsebene des Arms symmetrische Druckaufnehmer aufweist.

19. Prognostisches Variometer (1) nach einem der Ansprüche 14 bis 16, **dadurch gekennzeichnet, dass** das zweite Mittel (2) ein GPS ist, derart, dass, wenn die konventionelle Geschwindigkeit (VC) des Drehflügelflugzeugs kleiner als die Geschwindigkeit ($V_Y$) bei minimaler Leistung ist, die Eigengeschwindigkeit (VP) des Drehflügelflugzeugs der Vektorsumme der Geschwindigkeit über dem Boden ($\overrightarrow{V_S}$), die von einem GPS geliefert wird, und der Windgeschwin-

digkeit ($\overrightarrow{V_W}$), die erhalten wird aus der Differenz zwischen der Eigengeschwindigkeit, die von einem Anemometer geliefert wird, und der von einem GPS gelieferten Geschwindigkeit entspricht, wenn die konventionelle Geschwindigkeit (VC) gleich der Geschwindigkeit ($V_Y$) bei minimaler Leistung ist.

20. Prognostisches Variometer (1) nach Anspruch 15,
**dadurch gekennzeichnet, dass** das vierte Mittel (4) ein Beschleunigungsmesser ist, der auf der Längsachse des Drehflügelflugzeugs angeordnet ist.

21. Prognostisches Variometer (1) nach einem der Ansprüche 14 bis 20, **dadurch gekennzeichnet, dass** das dritte Mittel (3) ein Rechner ist, der die vertikale Geschwindigkeit ausgehend von den folgenden das Drehflügelflugzeug betreffenden Informationen erstellt wird:

- der momentanen vertikalen Geschwindigkeit des Drehflügelflugzeugs von einem vorgegebenen Drehflügelflugzeugtyp,
- der momentanen Eigengeschwindigkeit des Drehflügelflugzeugs von einem vorgegebenen Drehflügelflugzeugtyp,
- der momentanen Beschleunigung des Drehflügelflugzeugs von einem vorgegebenen Drehflügelflugzeugtyp,
- der vorbestimmten Geschwindigkeit ($V_Y$) bei minimaler Leistung des Drehflügelflugzeugs von einem vorgegebenen Drehflügelflugzeugtyp, und
- einer charakteristischen Konstanten (k) des Drehflügelflugzeugs von einem vorgegebenen Drehflügelflugzeugtyp,

## Claims

1. Method for obtaining a predictive vertical speed $v_{AP}$ of a rotorcraft which the rotorcraft is going to reach after a given time without modification of its trajectory, the following two conditions being satisfied:

- the calibrated airspeed (VC) in level flight being less than the minimum-power speed (VY), and
- the calibrated airspeed (VC) being decreasing,

**characterised in that** the following steps are performed in succession:

a) the instantaneous vertical speed (v) of the rotorcraft is measured,
b) a corrective vertical speed ($v_{CORR}$) is determined with the aid of at least one predictive term ($C_{P1}$),
c) the corrective vertical speed ($v_{CORR}$) is added to the instantaneous vertical speed (v) to obtain said predictive vertical speed ($v_{AP}$),

and **in that**, in the course of step b), during a step b1) said predictive term ($C_{P1}$) is determined such that:

$$C_{P1} = (v + k)\frac{V_{PP} - V_P}{2V_Y - V_{PP}}$$

with:

$V_P$ = instantaneous proper speed of the rotorcraft,
VPP = predictive proper speed of the rotorcraft determined by the following relationship where t and $\Delta t$ designate respectively the time and a time interval: $V_{PP} = V_P + \frac{dV_P}{dt}\Delta t$,

$V_Y$ = predetermined minimum-power speed of the rotorcraft, of a given type of rotorcraft,
k = predetermined characteristic constant of the rotorcraft from a linear approximation which corresponds to a proportionality ratio between powers of the rotorcraft and its vertical speed v,

the characteristic constant k being such that:

$$v = k\left(\frac{W}{W_n} - 1\right)$$

with the approximation: $\frac{W_n}{Wv_Y} = 2 - \frac{V_p}{V_Y}$, $Wv_Y$ and $W_n$ being the powers needed to fly level respectively at the minimum-power speed $V_Y$ and at the proper speed $V_P$, W being the instantaneous available power of the rotorcraft.

**2.** Method according to claim 1,
**characterised in that** during an additional step b1') a weighted predictive term ($C_{PP1}$) is determined, A being a first weighting coefficient determined by tests relating to each type of rotorcraft, such that:

$$C_{PP1} = A \times C_{P1}$$

**3.** Method according to claim 1, **characterised in that** the corrective vertical speed ($v_{CORR}$) is equal to the predictive term ($C_{P1}$) so that the predictive vertical speed ($v_{AP}$) is such that:

$$V_{AP} = v + C_{P1}$$

**4.** Method according to claim 2,
**characterised in that** the corrective vertical speed ($v_{CORR}$) is equal to the weighted predictive term ($C_{PP1}$), so that the predictive vertical speed ($v_{AP}$) is such that:

$$V_{AP} = v + C_{PP1}$$

**5.** Method according to any one of claims 1 to 2,
**characterised in that**, in the course of step b), during a step b2) a corrective term ($C_{P2}$) is determined such that:

$$C_{P2} = V_P \frac{dV_P}{dt}$$

$V_P$ designating the instantaneous speed of the rotorcraft and $\frac{dV_P}{dt}$ its instantaneous acceleration, t being the time.

**6.** Method according to claim 5,
**characterised in that**, having determined in the course of a step b1) a predictive term ($C_{P1}$), the corrective vertical speed ($v_{CORR}$) is equal to the addition of the corrective term ($C_{P2}$) and the predictive term $C_{P1}$ so that the predictive vertical speed ($v_{AP}$) is such that:

$$v_{AP} = v + C_{P1} + C_{P2}$$

**7.** Method according to claim 5,
**characterised in that**, having determined in the course of an additional step b'1) a weighted predictive term ($C_{PP1}$), the corrective vertical speed ($v_{COOR}$) is equal to the addition of the corrective term ($C_{P2}$) and the weighted predictive term ($C_{PP1}$) so that the predictive vertical speed ($v_{AP}$) is such that:

$$v_{AP} = v + C_{PP1} + C_{P2}$$

**8.** Method according to claim 5,

**characterised in that** during an additional step b2'), a weighted corrective term ($C_{PP2}$) is determined, B being a second weighting coefficient, such that:

$$C_{PP2} = B \ x \ C_{P2}$$

9. Method according to claim 8,
**characterised in that** the second weighting coefficient B is substantially equal to 0.5.

10. Method according to claims 8 or 9,
**characterised in that**, having determined in the course of a step b1) a predictive term ($C_{P1}$), the corrective vertical speed ($v_{CORR}$) is equal to the addition of the predictive term ($C_{P1}$) and the weighted corrective term ($C_{PP2}$) so that the predictive vertical speed ($v_{AP}$) is such that:

$$v_{AP=}v+C_{P1}+C_{PP2}$$

11. Method according to any one of claims 8 or 9,
**characterised in that**, having determined in the course of an additional step b'1) a weighted predictive term ($C_{PP1}$), the corrective vertical speed ($v_{CORR}$) is equal to the addition of the weighted predictive term ($C_{PP1}$) and the weighted corrective term ($C_{PP2}$) so that the predictive vertical speed ($v_{AP}$) is such that:

$$v_{AP}=v+C_{PP1}+C_{PP2}$$

12. Method according to claim 1,
**characterised in that** the time interval ($\Delta t$) is ten seconds.

13. Method according to any one of claims 1 to 12,
**characterised in that** if the calibrated airspeed (VC) of the rotorcraft is less than the minimum-power speed ($V_Y$), the proper speed (VP) of said rotorcraft is calculated by obtaining the vector sum of the ground speed ($\overrightarrow{V_S}$) supplied by a GPS and the wind speed ($\overline{V_W}$) obtained by difference between the proper speed given by an airspeed indicator and the speed given by a GPS when the calibrated airspeed (VC) is equal to the minimum-power speed ($V_Y$).

14. Predictive vertical speed indicator (1) for obtaining a predictive vertical speed $v_{AP}$ of a rotorcraft implementing the method according to any one of the preceding claims,
**characterised in that** it comprises:

    - a first means (1') for measuring the instantaneous vertical speed v of a rotorcraft,
    - a second means (2) for measuring the instantaneous proper speed Vp of a rotorcraft,
    - a third means (3) for calculating the predictive vertical speed $v_{AP}$ of a rotorcraft, this third means being connected on the one hand to the first and second means respectively by a first connection ($\ell1$) and a second connection ($\ell2$) and containing in memory the predetermined values of the minimum-power speed ($V_Y$) and of a characteristic constant (k) which are constants relating to said rotorcraft, of a given type of rotorcraft, k being predetermined from a linear approximation which corresponds to a proportionality ratio between powers and vertical speed of the rotorcraft, such that:

$$v = k(\frac{W}{W_n} - 1)$$

with the approximation: $\dfrac{W_n}{Wv_Y} = 2 - \dfrac{V_p}{V_Y},$

$Wv_Y$ and $W_n$ being the powers needed to fly level respectively at the minimum-power speed $V_Y$ and at the proper speed $V_P$, W being the instantaneous available power of the rotorcraft

the third means (3) being a calculator working out the predictive vertical speed $V_{PP}$ in particular from the following information relating to the rotorcraft:

- the instantaneous vertical speed v of the rotorcraft of a given type of rotorcraft,
- the instantaneous proper speed $V_P$ of the rotorcraft of a given type of rotorcraft,
- the predetermined minimum-power speed ($V_Y$) of the rotorcraft of a given type of the rotorcraft,
- the predetermined characteristic constant (k) of the rotorcraft of a given type of the rotorcraft,

a predictive corrective term $C_{P1}$, such that $C_{P1} = (v + k) \dfrac{V_{PP} - V_P}{2V_Y - V_{PP}}$, being applicable to the vertical speed v.

**15.** Predictive vertical speed indicator (1) according to claim 14,
**characterised in that** it further comprises a fourth means (4) connected to the third means (3) by a fourth connection ($\ell4$), in order to measure the instantaneous acceleration $\left(\dfrac{dV_P}{dt}\right)$ of said rotorcraft.

**16.** Predictive vertical speed indicator (1) according to one of claims 14 or 15,
**characterised in that**, the predictive vertical speed ($v_{AP}$) worked out by the third means (3) is displayed via a third connection ($\ell3$) on the indicator (20) of said first means (1') .

**17.** Predictive vertical speed indicator (1) according to any one of claims 14 to 16,
**characterised in that** said second means (2) is an omnidirectional air data system.

**18.** Predictive vertical speed indicator (1) according to any one of claims 14 to 16,
**characterised in that** the second means (2) is an airspeed indicator comprising an arm rotating at constant speed, provided with two pressure probes arranged each at one of the ends of said arm, each probe having two pressure intakes symmetrical with respect to the plane of rotation of the arm.

**19.** Predictive vertical speed indicator (1) according to any one of claims 14 to 16,
**characterised in that** the second means (2) is a GPS such that if the calibrated airspeed (VC) of the rotorcraft is less than the minimum-power speed ($V_Y$), the proper speed ($V_P$) of said rotorcraft corresponds to the vector sum of the ground speed ($\overrightarrow{V_S}$) supplied by a GPS and the wind speed ($\overrightarrow{V_W}$) obtained for its part by difference between the speed given by an airspeed indicator and the speed given by a GPS when the calibrated airspeed (VC) is equal to the minimum-power speed ($V_Y$).

**20.** Predictive vertical speed indicator (1) according to claim 15,
**characterised in that** the fourth means (4) is an accelerometer arranged along the longitudinal axis of the rotorcraft.

**21.** Predictive vertical speed indicator (1) according to any one of claims 14 to 20,
**characterised in that** the third means (3) is a calculator working out the vertical speed from the following information relating to the rotorcraft:

- the instantaneous vertical speed of the rotorcraft of a given type of rotorcraft,
- the instantaneous proper speed of the rotorcraft of a given type of rotorcraft,
- the instantaneous acceleration of the rotorcraft of a given type of rotorcraft,
- the predetermined minimum-power speed ($V_Y$) of the rotorcraft of a given type of rotorcraft, and
- a characteristic constant (k) of the rotorcraft of a given type of rotorcraft.

Fig.1

Fig.2

EP 2 193 379 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0006773 A

- FR 0607239